# EUROPEAN PATENT APPLICATION

(11) **EP 4 818 267 A1**
(43) Date of publication of application: **07.10.2026**
(21) Application number: 24915714.0
(22) Date of filing: 23.12.2024
(51) Int. Cl.: C08L 101/12, C08K 13/02, H01Q 15/02, C08K 3/22, C08K 5/20

(54) **COMPOSITION, ELECTROMAGNETIC FLUX CONTROL MEMBER, AND COMMUNICATION METHOD**

(30) Priority: 05.01.2024 JP 2024000635
(71) Applicant: Enplas Corporation, Kawaguchi-shi, Saitama 332-0034 (JP)
(72) Inventor: SHEN, Yihua, Kawaguchi-shi, Saitama 332-0034 (JP); HSU, Chun jui, Kawaguchi-shi, Saitama 332-0034 (JP); TAGUCHI, Yuki, Kawaguchi-shi, Saitama 332-0034 (JP)
(74) Representative: J A Kemp LLP
(86) International application number: PCT/JP2024/045510
(87) International publication number: WO 2025/146791

(57) **Abstract**

The present disclosure provides a composition having a high dielectric constant and a low dielectric loss tangent and having high moldability even when a content of an inorganic dielectric filler is high. A composition of the present disclosure includes a thermoplastic resin, an inorganic dielectric filler, and a wax, wherein the inorganic dielectric filler includes at least one compound selected from the group consisting of titanium oxide, zirconium oxide, hafnium oxide, rutherfordium oxide, and salts thereof, the wax includes a wax having an SP value of 8.5 (cal/cm³)^{1/2} or more or at least one wax selected from the group consisting of a wax having an amide group and a wax having a carboxy group, and the composition has a dielectric loss tangent of 0.01 or less.

## Description

### TECHNICAL FIELD

The present disclosure relates to a composition, an electromagnetic flux control member, and a communication method.

### BACKGROUND ART

In wireless communication, lens antennas are used transmitting a larger amount of information over a long distance with high efficiency. A lens antenna has a function of controlling a propagation direction of electromagnetic waves, such as converting a spherical wave into a plane wave. In recent years, lens antennas have also begun to be used for radio waves having short wavelengths, such as quasi-millimeter waves, millimeter waves, and terahertz waves.

For example, Patent Literature 1 describes a lens antenna manufactured by injection molding or the like using a dielectric composite material. The dielectric composite material described in Patent Literature 1 includes a polyolefin resin and ceramic powder (an inorganic dielectric filler) containing titanium oxide or a titanate.

### Citation List

### Patent Literature

Patent literature 1: WO 2010/027074

### SUMMARY OF INVENTION

### Technical Problem

A lens antenna such as that described in Patent Literature 1 is required to have a high dielectric constant and a low dielectric loss tangent. In order to increase the dielectric constant of the lens antenna described in Patent Literature 1, increasing a content of the inorganic filler in the dielectric composite material may be considered. However, when the content of the inorganic filler in the dielectric composite material described in Patent Literature 1 is increased, a fluidity of the dielectric composite material may decrease. As a result, moldability may decrease during injection molding due to melt fracture or the like, and consequently the performance of the lens antenna may decrease.

Hence, it is an object of the present disclosure to provide a composition having a high dielectric constant and a low dielectric loss tangent and having high moldability even when a content of an inorganic dielectric filler is high, and an electromagnetic flux control member and a communication method using the composition.

### Solution to Problem

In order to achive the above object, the present disclosure provides a first composition including a thermoplastic resin, an inorganic dielectric filler, and a wax, wherein the inorganic dielectric filler includes at least one compound selected from the group consisting of titanium oxide, zirconium oxide, hafnium oxide, rutherfordium oxide, and salts thereof, the wax includes a wax having an SP value of 8.5 (cal/cm³)^{1/2} or more, and the composition has a dielectric loss tangent of 0.01 or less.

The present disclosure provides a second composition including a thermoplastic resin, an inorganic dielectric filler, and a wax, wherein the inorganic dielectric filler includes at least one compound selected from the group consisting of titanium oxide, zirconium oxide, hafnium oxide, rutherfordium oxide, and salts thereof, the wax includes at least one wax selected from the group consisting of a wax having an amide group and a wax having a carboxy group, and the composition has a dielectric loss tangent of 0.01 or less. Note that, hereinafter, the first composition of the present disclosure and the second composition of the present disclosure may be collectively referred to as the "composition of the present disclosure." Hereinafter, the "composition of the present disclosure" includes both the first composition of the present disclosure and the second composition of the present disclosure unless otherwise specified.

The present disclosure provides an electromagnetic flux control member including the composition according to the present disclosure.

The present disclosure provides a communication method including controlling a propagation direction of electromagnetic waves using the electromagnetic flux control member according to the present disclosure, and performing communication using the electromagnetic waves.

### Advantageous Effects of Invention

The present disclosure can provide a composition having a high dielectric constant and a low dielectric loss tangent and having high moldability even when a content of an inorganic dielectric filler is high, and an electromagnetic flux control member and a communication method using the composition.

### BRIEF DESCRIPTION OF DRAWINGS

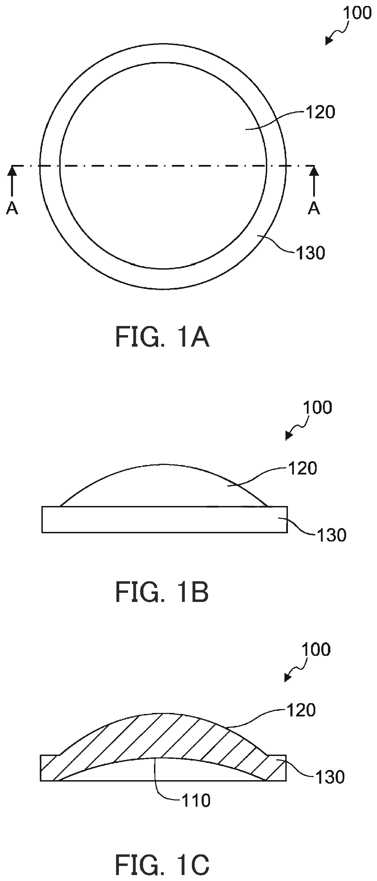

[FIGs. 1A to 1C] FIGs. 1A to 1C are diagrams illustrating an example of the electromagnetic flux control member of the present disclosure. FIG. 1A is a plan view. FIG. 1B is a side view. FIG. 1C is a cross-sectional view.

### DESCRIPTION OF EMBODIMENTS

Hereinafter, the present disclosure will be described in detail with reference to examples. However, the present disclosure is not limited to the following description.

### [1. Composition]

As described above, a first composition of the present disclosure is a composition including a thermoplastic resin, an inorganic dielectric filler, and a wax, wherein the inorganic dielectric filler includes at least one compound selected from the group consisting of titanium oxide, zirconium oxide, hafnium oxide, rutherfordium oxide, and salts thereof, the wax includes a wax having an SP value of 8.5 (cal/cm³)^{1/2} or more, and the composition has a dielectric loss tangent of 0.01 or less.

As described above, a second composition of the present disclosure is a composition including a thermoplastic resin, an inorganic dielectric filler, and a wax, wherein the inorganic dielectric filler includes at least one compound selected from the group consisting of titanium oxide, zirconium oxide, hafnium oxide, rutherfordium oxide, and salts thereof, the wax includes at least one wax selected from the group consisting of a wax having an amide group and a wax having a carboxy group, and the composition has a dielectric loss tangent of 0.01 or less.

As described above, the dielectric loss tangent of the composition of the present disclosure is 0.01 or less, and may be, for example, 0.009 or less, 0.008 or less, 0.007 or less, or 0.006 or less. The lower limit of the dielectric loss tangent of the composition of the present disclosure is not particularly limited, and may be, for example, 0 or more, a value greater than 0, 0.0001 or more, 0.0002 or more, or 0.0003 or more. The dielectric loss tangent may be, for example, 0 to 0.01, greater than 0 and 0.008 or less, 0.0001 to 0.01, 0.0002 to 0.008, or 0.0003 to 0.006.

The dielectric loss tangent of the composition of the present disclosure can be measured using a terahertz time-domain spectrometer equipped with a focused beam optical system (Nippo Precision Co., Ltd.). Specifically, using the terahertz time-domain spectrometer, scanning is performed at a temperature of 25°C in a transmission polarization measurement mode and by an optical path length delay method, and the dielectric loss tangent is measured at nine frequency points of 252, 257, 263, 269, 275, 280, 286, 292, and 298 GHz. Next, an average value of the measured dielectric loss tangent at the nine points is calculated, and this average value is defined as the dielectric loss tangent of the composition of the present disclosure. The dielectric loss tangent of the composition of the present disclosure can be measured, for example, by molding the composition of the present disclosure by an injection molding method (280°C) to prepare a disk-shaped test specimen having a thickness of 1.5 mm and a diameter of 30 mm for dielectric loss tangent measurement, and measuring the specimen under the above-described conditions. Prior to the measurement, as a pretreatment of the test specimen, the specimen is dried in a forced-air constant-temperature oven at 80°C for 4 hours or more, and then allowed to stand for 24 hours or more in an environment at a temperature of 25 ± 2°C and a humidity of 50 ± 10%.

### [1-1. Thermoplastic resin]

In the composition of the present disclosure, the thermoplastic resin may have a dielectric loss tangent of, for example, 0.01 or less, 0.009 or less, 0.008 or less, 0.007 or less, or 0.005 or less. The lower limit of the dielectric loss tangent of the thermoplastic resin is not particularly limited, and may be, for example, 0 or more, a value greater than 0, 0.0001 or more, 0.0003 or more, or 0.0005 or more. The dielectric loss tangent of the thermoplastic resin may be, for example, 0 to 0.01, or greater than 0 and 0.005 or less.

The numerical value of the dielectric loss tangent of the thermoplastic resin is not particularly limited, and may be, for example, within the above-described numerical ranges from the viewpoint of the dielectric loss tangent of the composition of the present disclosure. The dielectric loss tangent of the thermoplastic resin can be measured under the same conditions using a terahertz time-domain spectrometer equipped with a focused beam optical system (Nippo Precision Co., Ltd.), in the same manner as the above-described method for measuring the dielectric loss tangent of the present disclosure.

The thermoplastic resin may have an SP value of, for example, 7.5 (cal/cm³)^{1/2} or more, 8.0 (cal/cm³)^{1/2} or more, or 8.5 (cal/cm³)^{1/2} or more. The upper limit of the SP value of the thermoplastic resin is not particularly limited, and may be, for example, 14.0 (cal/cm³)^{1/2} or less, 13.5 (cal/cm³)^{1/2} or less, 13.0 (cal/cm³)^{1/2} or less, 12.5 (cal/cm³)^{1/2} or less, or 12.0 (cal/cm³)^{1/2} or less, and may be, for example, 7.5 to 14.0 (cal/cm³)^{1/2}, 8.0 to 12.5 (cal/cm³)^{1/2}, 8.0 to 12.0 (cal/cm³)^{1/2}, or 8.0 to 11.0 (cal/cm³)^{1/2}.

The SP value of the thermoplastic resin can be calculated based on the chemical structure of the thermoplastic resin by the Fedors method, in the same manner as the method for calculating the SP value of the wax described below. In the present disclosure, the SP value refers to a solubility parameter.

The thermoplastic resin is not particularly limited, and examples thereof include a polyolefin resin, a polystyrene resin, a polyphenylene ether resin, and a thermoplastic fluororesin. Examples of the polyolefin resin include polyethylene (low-density polyethylene, medium-density polyethylene, high-density polyethylene, linear low-density polyethylene, and ultra-low-density polyethylene), polymethylpentene, polypropylene, cycloolefin resins, and copolymer resins thereof. Examples of the cycloolefin resin include COC (cycloolefin copolymer) and COP (cycloolefin polymer). Examples of the COC include copolymers of norbornene and an olefin such as ethylene, propylene, or isobutene, and copolymers of norbornene and a cyclic olefin such as cyclopentene, cyclohexene, or cycloheptene. Examples of the COP include ring-opening metathesis polymers of norbornene. Examples of the polystyrene resin include syndiotactic polystyrene and modified polystyrene. Examples of the polyphenylene ether resin include modified polyphenylene ether. One type of the wax may be used alone, or two or more types thereof may be used in combination. From the viewpoints of dielectric properties and melt processability (fluidity), the thermoplastic resin is preferably a polyolefin resin, and more preferably a polycycloolefin resin.

The content of the thermoplastic resin in the composition of the present disclosure may be, for example, 20 mass% or more, 25 mass% or more, or 30 mass% or more, and may be, for example, 75 mass% or less, 70 mass% or less, 60 mass% or less, 50 mass% or less, or 40 mass% or less, and may be, for example, 20 to 70 mass%, 25 to 70 mass%, 25 to 60 mass%, 30 to 60 mass%, or 30 to 50 mass%. From the viewpoint of achieving a low dielectric loss tangent in the composition of the present disclosure, it is preferable that the content of the thermoplastic resin be not excessively high. From the viewpoint of achieving high fluidity in the composition of the present disclosure, it is preferable that the content of the thermoplastic resin be not excessively low.

### [1-2. Inorganic dielectric filler]

In the composition of the present disclosure, the inorganic dielectric filler includes, as described above, at least one compound selected from the group consisting of titanium oxide, zirconium oxide, hafnium oxide, rutherfordium oxide, and salts thereof. Hereinafter, titanium, zirconium, hafnium, and rutherfordium may collectively be referred to as "Group 4 elements of the periodic table," and oxides thereof may collectively be referred to as "oxides of Group 4 elements of the periodic table." In the present disclosure, among the Group 4 elements of the periodic table, titanium is preferred from the viewpoint of availability. That is, the inorganic dielectric filler preferably includes one or more compounds selected from the group consisting of oxides of titanium and salts thereof (titanates). Examples of the oxide of titanium include titanium oxide. Examples of the crystal form of titanium oxide include anatase, rutile, and brookite. In the crystals of titanium oxide, from the viewpoints of stability and dielectric properties, the proportion of the rutile phase is preferably 70% or more, more preferably 80% or more, and most preferably 90% or more. The upper limit of the proportion of the rutile phase in the titanium oxide crystals is not particularly limited, and may be, for example, 100% or less. Examples of the titanate include calcium titanate, barium titanate, strontium titanate, magnesium titanate, lead titanate, calcium magnesium titanate, and neodymium titanate. From the viewpoints of dispersibility, low dielectric loss tangent, and high dielectric constant, the inorganic dielectric filler is preferably titanium oxide (TiO₂) particles, strontium titanate particles, or calcium titanate (CaTiO₃) particles. One type of the inorganic dielectric filler may be used alone, or two or more types thereof may be used in combination.

The median particle diameter of the inorganic dielectric filler is not particularly limited. From the viewpoint of dispersibility, the median particle diameter of the inorganic dielectric filler may be, for example, 0.05 µm or more, 0.06 µm or more, or 0.10 µm or more, and may be, for example, 50 µm or less, 30 µm or less, 20 µm or less, 10 µm or less, 5 µm or less, or 3.5 µm or less, and may be, for example, 0.05 to 50 µm, 0.06 to 30 µm, 0.06 to 10 µm, 0.1 to 5 µm, or 0.1 to 3.5 µm. The median particle diameter of the inorganic dielectric filler may also be, for example, less than 1/20 of a wavelength used in an electromagnetic flux control member including the composition of the present disclosure. The median particle diameter of the inorganic dielectric filler can be measured by a dynamic light scattering method. The shape and surface treatment of the inorganic dielectric filler may be appropriately selected in consideration of dispersibility.

The content of the inorganic dielectric filler in the composition of the present disclosure may be, for example, 25 mass% or more, 30 mass% or more, 40 mass% or more, 50 mass% or more, or 60 mass% or more, and may be, for example, 80 mass% or less, 75 mass% or less, or 70 mass% or less, and may be, for example, 30 to 80 mass%, 40 to 80 mass%, 50 to 75 mass%, or 60 to 75 mass%. When the content of the inorganic dielectric filler is 80 mass% or less, the composition tends to be easily molded. When the content of the inorganic dielectric filler is 30 mass% or more, the dielectric constant of the composition tends to be sufficiently increased.

### [1-3. Wax]

In the first composition of the present disclosure, as described above, the wax includes a wax having an SP value (solubility parameter) of 8.5 or more. The SP value of the wax may be, for example, 8.5 (cal/cm³)^{1/2} or more, 9.0 (cal/cm³)^{1/2} or more, (cal/cm³)^{1/2} or more, (cal/cm³)^{1/2} or more, or 9.5 (cal/cm³)^{1/2} or more. The upper limit of the SP value of the wax is not particularly limited, and may be, for example, 20 (cal/cm³)^{1/2} or less, 19 (cal/cm³)^{1/2} or less, 18 (cal/cm³)^{1/2} or less, 17 (cal/cm³)^{1/2} or less, or 16 (cal/cm³)^{1/2} or less. The SP value of the wax may be, for example, 8.5 to 20 (cal/cm³)^{1/2}, 8.5 to 18 (cal/cm³)^{1/2}, 9.0 to 17 (cal/cm³)^{1/2}, 9.0 to 16 (cal/cm³)^{1/2}, or 9.5 to 16 (cal/cm³)^{1/2}.

In the present disclosure, the SP value can be calculated by the Fedors method (also referred to as an atomic group contribution method). This method is described in Polymer Engineering and Science, February 1974, Vol. 14, No. 2, pp. 147 to 154. Based on data on the evaporation energy and molar volume of atoms and atomic groups in the structural formula of the compound for which the SP value is to be calculated, the SP value can be calculated according to the following Equation (1).$δ i = \sqrt{\left[Δei/Δvi\right]}$ (1)

In Equation (1),
δi represents the SP value (unit: (cal/cm³)^{1/2}),
Δei represents a total value of evaporation energies of atomic groups (also referred to as cohesive energy density, unit: cal/mol) in the structural formula of the compound for which the SP value (δi) is to be calculated, and
Δvi represents a total value of molar volumes of atomic groups (also referred to as molecular volume, unit: cm³/mol) in the structural formula of the compound for which the SP value (δi) is to be calculated.

In the present disclosure, the SP value of a compound (such as the thermoplastic resin or the wax) calculated by the Fedors method may, for example, be described in literature sources (such as manufacturer materials, experimental data in papers, or patent publications).

In the first composition of the present disclosure, the type of the wax is not particularly limited. For example, as in the second composition of the present disclosure, the wax may include at least one wax selected from the group consisting of a wax having an amide group and a wax having a carboxy group.

In the wax of the first composition of the present disclosure, the content of the wax having an SP value of 8.5 (cal/cm³)^{1/2} or more may be, for example, 50 mass% or more, 60 mass% or more, 70 mass% or more, 80 mass% or more, or 90 mass% or more, and may be, for example, 100 mass% or less, 98 mass% or less, or 95 mass% or less, and may be, for example, 50 to 100 mass%, 50 to 98 mass%, 60 to 98 mass%, 70 to 98 mass%, or 80 to 95 mass%.

In the second composition of the present disclosure, as described above, the wax includes at least one wax selected from the group consisting of a wax having an amide group and a wax having a carboxy group. Hereinafter, a wax having an amide group may be referred to as an "amide-based wax," and a wax having a carboxy group may be referred to as a "carboxylic acid-based wax." In the present disclosure, the amide-based wax and the carboxylic acid-based wax are not particularly limited, and, for example, known waxes may be used. Examples of the amide-based wax include monocarboxylic acid amides such as erucamide, oleamide, and stearamide, and monocarboxylic acid diamides such as ethylene bisstearamide, ethylene bisoleamide, and N,N'-ethylene bis(12-hydroxystearamide). Examples of the carboxylic acid-based wax include maleic acid-modified polypropylene and styrene-maleic acid copolymers. More specific examples of compounds of the amide-based wax include N,N'-[1,3-phenylenebis(methylene)]distearamide. More specific examples of compounds of the carboxylic acid-based wax include maleic anhydride-modified polypropylene.

In the second composition of the present disclosure, the SP value of the wax is not particularly limited. For example, the SP value of the wax may be the same as the SP value of the wax in the first composition of the present disclosure, or may be different therefrom.

In the wax of the second composition of the present disclosure, the content of at least one wax selected from the group consisting of a wax having an amide group and a wax having a carboxy group may be, for example, 50 mass% or more, 60 mass% or more, 70 mass% or more, 80 mass% or more, or 90 mass% or more, and may be, for example, 100 mass% or less, 98 mass% or less, or 95 mass% or less, and may be, for example, 50 to 100 mass%, 50 to 98 mass%, 60 to 98 mass%, 70 to 98 mass%, or 80 to 95 mass%.

In the composition of the present disclosure, one type of the wax may be used alone, or two or more types thereof may be used in combination. From the viewpoints of dielectric properties and dispersibility, amide-based wax is particularly preferred.

The content of the wax in the composition of the present disclosure may be, for example, 0.01 mass% or more, 0.02 mass% or more, 0.03 mass% or more, 0.04 mass% or more, or 0.04 mass% or more, and may be, for example, 5 mass% or less, 3.0 mass% or less, 2.0 mass% or less, 1.8 mass% or less, or 1.5 mass% or less, and may be, for example, 0.01 to 5 mass%, 0.02 to 3.0 mass%, 0.03 to 2.0 mass%, 0.03 to 1.8 mass%, or 0.04 to 1.5 mass%. When the content of the wax is within the above ranges, the moldability of the composition of the present disclosure tends to be improved while maintaining the dielectric constant of the composition.

### [1-4. Other components]

As described above, the composition of the present disclosure includes a thermoplastic resin, an inorganic dielectric filler, and a wax. The composition of the present disclosure may further include other components in addition to the thermoplastic resin, the inorganic dielectric filler, and the wax, within a range that does not impair the purpose and effects of the present disclosure, or may not include such other components. The other components are not particularly limited, and examples thereof include plasticizers, antioxidants, flame retardants, flow modifiers, and ultraviolet absorbers. When the composition of the present disclosure includes the other components, the content of the other components is not particularly limited, and may be, for example, 0.001 mass% or more, 0.003 mass% or more, 0.005 mass% or more, 0.01 mass% or more, or 0.05 mass% or more, and may be, for example, 5 mass% or less, 4 mass% or less, 3 mass% or less, or 2 mass% or less, and may be, for example, 0.001 to 5 mass%, 0.003 to 4 mass%, 0.005 to 3 mass%, 0.01 to 2 mass%, or 0.05 to 2 mass%.

### [1-5. Method for producing the composition]

The method for producing the composition of the present disclosure is not particularly limited. For example, it may be the same as a known method for producing a composition containing a resin, or may be the same as a known method for producing a composition for an electromagnetic flux control member. For example, the method for producing the composition of the present disclosure may include simple mixing of the respective components contained in the composition of the present disclosure. When mixing the respective components, heating or the like may be performed as necessary. The mixing method is preferably a method capable of sufficiently mixing the respective components contained in the composition of the present disclosure (for example, the thermoplastic resin, the inorganic dielectric filler, the wax, and other components), and may be, for example, melt-kneading. In this case, all the components may be mixed and then melt-kneaded, or only some of the components may be melt-kneaded first and the remaining components may be kneaded afterward. The apparatus used for melt-kneading is not particularly limited, and general equipment such as an extruder, a kneader, or a Banbury mixer can be used. The apparatus is preferably a twin-screw kneading extruder, particularly from the viewpoint of obtaining a composition having a uniform composition.

### [2. Electromagnetic flux control member]

As described above, the electromagnetic flux control member of the present disclosure is characterized in that it includes the composition of the present disclosure. Other than this, the electromagnetic flux control member of the present disclosure is not particularly limited. For example, the electromagnetic flux control member of the present disclosure may include components other than the composition of the present disclosure, or may not include such components. For example, the electromagnetic flux control member of the present disclosure may be an electromagnetic flux control member including the composition of the present disclosure in place of all or part of a composition included in a general electromagnetic flux control member.

The electromagnetic flux control member of the present disclosure may be, for example, a lens antenna, or may be an antenna having various shapes, such as a horn antenna.

The application of the electromagnetic flux control member of the present disclosure is not particularly limited, and it can be used, for example, for communication using electromagnetic waves. For example, the electromagnetic flux control member of the present disclosure may be used together with a primary radiator, such as a horn antenna or a waveguide, and can function as a part of a transmitting unit that transmits electromagnetic waves and also as a part of a receiving unit that receives electromagnetic waves. The electromagnetic waves are not particularly limited, and may be, for example, millimeter waves, quasi-millimeter waves, or terahertz waves.

The frequency of the electromagnetic waves used for communication using the electromagnetic flux control member of the present disclosure is not particularly limited. For example, the frequency may be 30 GHz or more, 50 GHz or more, 70 GHz or more, or 90 GHz or more, and may be, for example, 3000 GHz or less, 2000 GHz or less, 1000 GHz or less, 500 GHz or less, or 400 GHz or less, and may be, for example, 30 to 3000 GHz, 50 to 2000 GHz, 70 to 1000 GHz, 70 to 500 GHz, or 90 to 400 GHz. The electromagnetic flux control member of the present disclosure is preferably usable, for example, for communication using electromagnetic waves having a frequency of 300 GHz or more. For example, because the electromagnetic flux control member of the present disclosure has a high dielectric constant, it can be used for communication using such high-frequency electromagnetic waves and enables efficient communication. However, as described above, the frequency of the electromagnetic waves used for communication using the electromagnetic flux control member of the present disclosure is not particularly limited.

The electromagnetic flux control member of the present disclosure can be miniaturized, for example, because it has a high dielectric constant (that is, a high refractive index).

Hereinafter, an example of the electromagnetic flux control member of the present disclosure will be described in detail with reference to the drawings. However, the electromagnetic flux control member of the present disclosure is not limited to the following description.

FIGs. 1A to 1C illustrate an example of the electromagnetic flux control member of the present disclosure. FIG. 1A is a plan view of the electromagnetic flux control member, FIG. 1B is a front view of the electromagnetic flux control member, and FIG. 1C is a cross-sectional view taken along line A-A shown in FIG. 1A. The electromagnetic flux control member shown in FIGs. 1A to 1C is a lens antenna.

As shown in FIGs. 1A to 1C, an electromagnetic flux control member 100 includes a first region 110 and a second region 120. The electromagnetic flux control member 100 may further include a flange 130, as shown in FIGs. 1A to 1C. In the embodiment shown in FIGs. 1A to 1C, the electromagnetic flux control member 100 includes the first region 110, the second region 120, and the flange 130.

The first region 110 is a surface through which electromagnetic waves from a primary radiator are incident into the electromagnetic flux control member 100 when the electromagnetic flux control member 100 functions as a part of a transmitting unit. On the other hand, when the electromagnetic flux control member 100 functions as a part of a receiving unit, the first region 110 is a surface through which electromagnetic waves that are incident on the second region 120 and propagate inside the electromagnetic flux control member 100 exit the electromagnetic flux control member 100 to the outside.

The shape of the first region 110 is not particularly limited and may be appropriately set together with the shape of the second region 120 according to the function required for the electromagnetic flux control member 100. The first region 110 may have a convex shape (convex surface), a concave shape (concave surface), or a planar shape (flat surface). In the present embodiment, the first region 110 has a concave shape.

The second region 120 is disposed on a side opposite to the first region 110 in the electromagnetic flux control member 100. When the electromagnetic flux control member 100 functions as a part of a transmitting unit, the second region 120 is a surface through which electromagnetic waves that are incident into the electromagnetic flux control member 100 through the first region 110 exit the electromagnetic flux control member 100 to the outside. On the other hand, when the electromagnetic flux control member 100 functions as a part of a receiving unit, the second region 120 is a surface through which electromagnetic waves from the outside are incident into the electromagnetic flux control member 100.

The shape of the second region 120 is not particularly limited and may be appropriately set together with the shape of the first region 110 according to the function required for the electromagnetic flux control member 100. The second region 120 may have a convex shape (convex surface), a concave shape (concave surface), or a planar shape (flat surface). In the present embodiment, the second region 120 has a convex shape.

The flange 130 facilitates handling of the electromagnetic flux control member 100. The flange 130 is disposed so as to connect the first region 110 and the second region 120.

Although not particularly shown in the drawings, a plurality of ribs or a plurality of protrusions (columnar bodies) may or may not be disposed on at least one of the first region 110 and the second region 120. The plurality of ribs (plurality of protrusions) disposed on the first region 110 suppress reflection at the first region 110 of electromagnetic waves incident on the first region 110 or electromagnetic waves exiting from the first region 110. Similarly, the plurality of ribs (plurality of protrusions) disposed on the second region 120 suppress reflection at the second region 120 of electromagnetic waves incident on the second region 120 or electromagnetic waves exiting from the second region 120. By suppressing reflection of electromagnetic waves by the ribs (plurality of protrusions), the gain of transmission and reception of electromagnetic waves is improved. In such an electromagnetic flux control member 100 in which a plurality of ribs, a plurality of protrusions (columnar bodies), or the like are disposed, melt fracture during molding may become a problem. However, by producing the electromagnetic flux control member 100 using the composition of the present disclosure, transferability and mold releasability during molding can be improved.

The shape of a cured product (molded article) of a composition including the composition of the present disclosure is not limited to the electromagnetic flux control member 100 described above. For example, the shape of the cured product of the composition including the composition of the present disclosure may be any shape, such as particles, pellets, or lumps. When the composition is in the form of pellets, the shape of the pellets is not particularly limited and may be any shape, such as cylindrical, spherical, or ellipsoidal. The size thereof is also not particularly limited and may be appropriately selected according to the shape. For example, when the pellets are spherical, the diameter may be in a range of 1 to 10 mm. When the pellets are ellipsoidal, the major axis may be in a range of 1 to 10 mm, and the aspect ratio may be in a range of 0.1 to 1.0. Furthermore, when the pellets are cylindrical, the diameter may be in a range of 1 to 10 mm, and the height may be in a range of 1 to 10 mm.

The electromagnetic flux control member of the present disclosure may be used, for example, in a communication device including the electromagnetic flux control member of the present disclosure.

### [3. Communication method]

As described above, the communication method of the present disclosure is characterized by controlling a propagation direction of electromagnetic waves using the electromagnetic flux control member of the present disclosure and performing communication using the electromagnetic waves. The frequency of the electromagnetic waves is not particularly limited and may be, for example, as described above. As described above, according to the electromagnetic flux control member of the present disclosure, because it has a high dielectric constant, it can be used for communication using high-frequency electromagnetic waves, thereby enabling efficient communication.

Examples

Examples of the present disclosure will be described below. However, the present disclosure is not limited to these Examples.

Compositions of Examples and Comparative Examples were prepared as described below, and the properties thereof were evaluated.

### [1. Preparation of materials]

The following resins were prepared as thermoplastic resins. The dielectric loss tangents of these thermoplastic resins were measured by the method described above.
(a1) Cycloolefin copolymer (COC), which is a copolymer of norbornene and ethylene (manufactured by Polyplastics Co., Ltd., trade name: "TOPAS 6013M-07", dielectric loss tangent: 0.0003)
(a2) Polycarbonate resin (PC) (manufactured by Mitsubishi Engineering-Plastics Corporation, trade name: "Iupilon H-2000", dielectric loss tangent: 0.007)
(a3) Cycloolefin polymer (COP), which is a ring-opening metathesis polymer of norbornene (manufactured by Zeon Corporation, trade name: "ZEONEX K22R", dielectric loss tangent: 0.0005)

The following particles were prepared as inorganic dielectric fillers.
(b1) Titanium oxide particles: manufactured by Ishihara Sangyo Kaisha, Ltd., trade name: "CR-63" (median particle diameter: 0.21 µm)
(b2) Calcium titanate particles: manufactured by KCM Corporation, trade name: "CT-3" (median particle diameter: 3.3 µm)
(b3) Zirconium oxide particles: manufactured by Daiichi Kigenso Kagaku Kogyo Co., Ltd., trade name: "UEP-50" (median particle diameter: 0.52 µm)

The following waxes were prepared.
(c1) Amide-based wax (N,N'-[1,3-phenylenebis(methylene)]distearamide, manufactured by Koeisha Chemical Co., Ltd., trade name: "Light Amide WH-510K", SP value = 9.8 (cal/cm³)^{1/2})
(c2) Carboxylic acid-based wax (maleic anhydride-modified polypropylene, manufactured by Riken Vitamin Co., Ltd., trade name: "Rike Aid MG-670P", SP value = 8.2 (cal/cm³)^{1/2})
(c3) Carboxylic acid-based wax (ethylene-methyl acrylate-maleic anhydride copolymer, manufactured by Japan Polyethylene Corporation, trade name: "REXPEARL ET350X", SP value = 9.1 (cal/cm³)^{1/2})
(c4) Amide-based wax (N,N'-ethylene-bis-12-hydroxystearylamide, manufactured by Itoh Oil Chemicals Co., Ltd., trade name: "ITOHWAX J-530", SP value = 10.8 (cal/cm³)^{1/2})
(c5) Amide-based wax (manufactured by Arkema S.A., trade name: "nylon 6, Orgasol 1002 D NAT 1", SP value = 12.4 (cal/cm³)^{1/2})
(c6) Carboxylic acid-based wax (copolymer of styrene and maleic anhydride, manufactured by Polyscope Polymers B.V., trade name: "Xiran 1000", SP value = 15.2 (cal/cm³)^{1/2})

### [2. Production of compositions and samples]

### Example 1

36 parts by mass of the COC (a1), 64 parts by mass of the titanium oxide (b1), and 0.4 parts by mass of the amide-based wax "Light Amide" (c1) were kneaded at 280°C using a twin-screw kneading extruder TEM-26SX (Shibaura Machine Co., Ltd.) to obtain pellets (composition of Example 1). At this time, the dielectric filler was additionally fed from a feeder. Next, the obtained pellets were molded at 280°C using a horizontal injection molding machine PLASTAR Si-50 (Toyo Machinery & Metal Co., Ltd.) to produce a disk-shaped measurement sample having a thickness of 1.5 mm and a diameter of 30 mm, which was formed from the composition. Further, the pellets were molded at 280°C using an injection molding machine (PLASTAR Si-50) manufactured by Toyo Machinery & Metal Co., Ltd. to produce a lens antenna (electromagnetic flux control member of Example 1).

### Examples 2 to 14 and Comparative Examples 1 to 4

Pellets (compositions) of Examples 2 to 13 and Comparative Examples 1 to 4, measurement samples having a thickness of 1.5 mm formed from the compositions, and electromagnetic flux control members were produced in the same manner as in Example 1, except that the compositions were changed as summarized in Tables 1 to 4 below.

Hereinafter, unless otherwise specified, the term "sample" refers to the disk-shaped measurement sample having a thickness of 1.5 mm and a diameter of 30 mm formed from each of the compositions of Examples 1 to 13 and Comparative Examples 1 to 4.

### [3. Evaluation]

### Evaluation of Appearance

The appearance was evaluated by visually checking each sample after production to determine whether each sample after production had any abnormality in appearance. The visual observation results were evaluated according to the following criteria.

### Evaluation Criteria

G (Good): The appearance was smooth.
NG (No Good): The appearance was not smooth.

### Evaluation of dielectric constant and dielectric loss tangent

The dielectric constant and dielectric loss tangent were measured for each sample after production using a terahertz time-domain spectrometer equipped with a focused beam optical system (Nippo Precision Co., Ltd.). Specifically, using the terahertz time-domain spectrometer, scanning was performed at 25°C in a transmission polarization measurement mode and by an optical path length delay method, and the dielectric constant and dielectric loss tangent were measured at nine frequency points of 252, 257, 263, 269, 275, 280, 286, 292, and 298 GHz. Next, the average value of the measured dielectric constants at the nine points was defined as the dielectric constant, and similarly, the average value of the measured dielectric loss tangents at the nine points was defined as the dielectric loss tangent.

### Evaluation of dispersibility

Dispersibility was evaluated by observation using a scanning electron microscope (SEM). Specifically, the dispersibility of the inorganic dielectric filler in the cross section of each sample after production was observed. Dispersibility was evaluated according to the following criteria.

### Evaluation Criteria

1: The filler was aggregated.
2: The filler was partially dispersed.
3: The filler was uniformly dispersed.

Tables 1 to 4 below show the compositions, appearance, dielectric constant, dielectric loss tangent, and dispersibility of the compositions of the above Examples and Comparative Examples.

**Table 1**

| Component | SP Value | Example 1 | | Example 2 | | Example 3 | | Example 4 | |
|---|---|---|---|---|---|---|---|---|---|
| | | parts by mass | Vol (%) | parts by mass | Vol (%) | parts by mass | Vol (%) | parts by mass | Vol (%) |
| COC | - | 36 | 70 | 23 | 55 | 30 | 63 | 36 | 70 |
| TiO₂ | - | 64 | 30 | 77 | 45 | - | - | 64 | 30 |
| CaTiO₃ | - | - | - | - | - | 70 | 37 | - | - |
| Light Amide (amide-based wax) | 9.8 | 0.4 | - | 0.2 | - | 0.3 | - | - | - |
| Rike Aid MG-670P (carboxylic acid-based wax) | 8.2 | - | - | - | - | - | - | 0.4 | - |
| Total | - | 100.4 | 100.0 | 100.2 | 100.0 | 100.3 | 100.0 | 100.4 | 100.0 |
| Appearance | - | G | | G | | G | | G | |
| Dispersibility | - | 3 | | 2 | | 1 | | 1 | |
| Dielectric constant | - | 7.1 | | 11.4 | | 11.9 | | 5.9 | |
| Dielectric loss tangent | - | 0.0028 | | 0.0043 | | 0.0073 | | 0.0024 | |

**Table 2**

| Component | SP Value | Example 5 | | Example 6 | | Example 7 | | Example 8 | |
|---|---|---|---|---|---|---|---|---|---|
| | | parts by mass | Vol (%) | parts by mass | Vol (%) | parts by mass | Vol (%) | parts by mass | Vol (%) |
| COC | - | 36 | 70 | 36 | 70 | 36 | 70 | 36 | 70 |
| TiO₂ | - | 64 | 30 | 64 | 30 | 64 | 30 | 64 | 30 |
| REXPEARL ET350X (carboxylic acid-based wax) | 9.1 | 0.4 | - | - | - | - | - | - | - |
| ITOHWAX J-530 (amide-based wax) | 10.8 | - | - | 0.4 | - | - | - | - | - |
| Orgasol 1002 D NAT 1 (amide-based wax) | 12.4 | - | - | - | - | 0.4 | - | - | - |
| Xiran 1000 (carboxylic acid-based wax) | 15.2 | - | - | - | - | - | - | 0.4 | - |
| Total | - | 100.4 | 100.0 | 100.4 | 100.0 | 100.4 | 100.0 | 100.4 | 100.0 |
| Appearance | - | G | | G | | G | | G | |
| Dispersibility | - | 3 | | 3 | | 3 | | 3 | |
| Dielectric constant | - | 6.6 | | 7.0 | | 6.9 | | 6.9 | |
| Dielectric loss tangent | - | 0.0022 | | 0.0023 | | 0.0021 | | 0.0021 | |

**Table 3**

| Component | SP Value | Example 9 | | Example 10 | | Example 11 | | Example 12 | | Example 13 | | Example 14 | |
|---|---|---|---|---|---|---|---|---|---|---|---|---|---|
| | | parts by mass | Vol (%) | parts by mass | Vol (%) | parts by mass | Vol (%) | parts by mass | Vol (%) | parts by mass | Vol (%) | parts by mass | Vol (%) |
| COC | - | 36 | 70 | 36 | 70 | 31 | 65 | - | - | 36 | 70 | 58 | 85 |
| COP | | - | - | - | - | - | - | 31 | 65 | - | - | - | - |
| TiO₂ | - | 64 | 30 | 64 | 30 | 69 | 35 | 69 | 35 | - | - | 42 | 15 |
| ZrO₂ | | - | - | - | - | - | - | - | - | 64 | 30 | - | - |
| Light Amide (amide-based wax) | 9.8 | 0.04 | - | 1.0 | - | 0.3 | - | 0.3 | - | 0.4 | - | 0.4 | - |
| Total | - | 100.04 | 100.0 | 101.0 | 100.0 | 100.3 | 100.0 | 100.3 | 100.0 | 100.4 | 100.0 | 100.4 | 100.0 |
| Appearance | - | G | | G | | G | | G | | G | | G | |
| Dispersibility | - | 3 | | 3 | | 3 | | 3 | | 3 | | 3 | |
| Dielectric constant | - | 6.7 | | 7.1 | | 8.0 | | 8.4 | | 4.3 | | 4.3 | |
| Dielectric loss tangent | - | 0.0027 | | 0.005 | | 0.0028 | | 0.0021 | | 0.0077 | | 0.004 | |

**Table 4**

| Component | SP Value | Comp. Ex. 1 | | Comp. Ex. 2 | | Comp. Ex. 3 | | Comp. Ex.4 | |
|---|---|---|---|---|---|---|---|---|---|
| | | parts by mass | Vol (%) | parts by mass | Vol (%) | parts by mass | Vol (%) | parts by mass | Vol (%) |
| COC | - | 36 | 70 | 23 | 55 | 100 | 100 | - | - |
| PC | | - | - | - | - | - | - | 36 | 70 |
| TiO₂ | - | 64 | 30 | 77 | 45 | - | - | 64 | 30 |
| Light Amide (amide-based wax) | 9.8 | - | - | - | - | 1.0 | - | 0.4 | - |
| Total | - | 100.0 | 100.0 | 100.0 | 100.0 | 101.0 | 100.0 | 100.4 | 100.0 |
| Appearance | - | NG | | NG | | G | | G | |
| Dispersibility | - | 1 | | 1 | | - | | 2 | |
| Dielectric constant | - | Not measurable | | Not measurable | | 2.3 | | 7.2 | |
| Dielectric loss tangent | - | Not measurable | | Not measurable | | 0.05 | | 0.011 | |

As summarized in Tables 1 to 4, the samples of Examples 1 to 13, which contain a predetermined inorganic dielectric filler and a predetermined wax, exhibited good appearance while having a high dielectric constant and a low dielectric loss tangent.

As summarized in Table 1, Examples 1 and 2, in which titanium oxide (TiO₂) was used as the inorganic dielectric filler, showed better dispersibility than Example 3, in which calcium titanate (CaTiO₃) was used as the inorganic dielectric filler. In addition, Examples 1 and 2, in which a wax having an SP value of 8.5 (cal/cm³)^{1/2}or more (9.8 (cal/cm³)^{1/2}) was used, showed better dispersibility and dielectric constant than Example 4, in which a wax having an SP value of 8.2 (cal/cm³)^{1/2} was used.

As summarized in Table 2, Examples 5 to 8, in which respective waxes having SP values of 9.1 to 15.2 (cal/cm³)^{1/2} were used in place of the wax of Example 1, all exhibited excellent dispersibility and dielectric constant.

As summarized in Table 3, Examples 9 and 10, in which the content of the wax used in Example 1 was changed to 0.04 parts by mass and 1.0 parts by mass, respectively, both exhibited excellent dispersibility and dielectric constant. Example 11, in which COC was used as the thermoplastic resin, and Example 12, in which COP was used, both exhibited similarly excellent dispersibility and dielectric constant. Example 13, in which zirconium oxide (ZrO₂) was used as the inorganic dielectric filler in place of the titanium oxide (TiO₂) used in Example 1, exhibited excellent dispersibility and dielectric constant; however, Example 1, in which titanium oxide was used, exhibited a further improved dielectric constant. In addition, Example 14 had the same composition as Example 1 except that the ratio of COC to titanium oxide (TiO₂) was changed. As summarized in Table 3, Example 14 exhibited excellent dispersibility and dielectric constant, and also had a favorable dielectric loss tangent.

On the other hand, as summarized in Table 4, the samples of Comparative Examples 1 and 2, which did not contain wax, had poor appearance, and the dielectric constant and dielectric loss tangent could not be measured. This is considered to take place because, since the predetermined wax was not included, the fluidity decreased during molding, resulting in insufficient filling of the mold and occurrence of melt fracture.

Further, as summarized in Table 4, the sample of Comparative Example 3, which did not contain the predetermined inorganic dielectric filler, had a low dielectric constant. Moreover, the sample of Comparative Example 4 had a high dielectric loss tangent because polycarbonate, which has a high dielectric loss tangent, was used, and therefore the dielectric loss tangent of the composition itself was also high.

The present disclosure has been described above with reference to embodiments and examples. However, the present disclosure is not limited to the embodiments and examples described above, and various combinations, modifications, and selections may be made as appropriate within the scope that does not depart from the spirit of the present disclosure.

The present disclosure can also be described as in the following supplementary notes, but is not limited thereto.

### (Supplementary Note 1)

A composition, including:
a thermoplastic resin;
an inorganic dielectric filler; and
a wax, wherein

the inorganic dielectric filler includes at least one compound selected from the group consisting of titanium oxide, zirconium oxide, hafnium oxide, rutherfordium oxide, and salts thereof,
the wax includes a wax having an SP value of 8.5 (cal/cm³)^{1/2} or more, and
the composition has a dielectric loss tangent of 0.01 or less.

### (Supplementary Note 2)

The composition according to Supplementary Note 1, wherein
the wax includes a wax having an SP value of 9.0 (cal/cm³)^{1/2} or more.

### (Supplementary Note 3)

The composition according to Supplementary Note 1 or 2, wherein
the thermoplastic resin includes a thermoplastic resin having an SP value of 7.5 (cal/cm³)^{1/2} or more.

### (Supplementary Note 4)

A composition, including:
a thermoplastic resin;
an inorganic dielectric filler; and
a wax, wherein

the inorganic dielectric filler includes at least one compound selected from the group consisting of titanium oxide, zirconium oxide, hafnium oxide, rutherfordium oxide, and salts thereof,
the wax includes at least one wax selected from the group consisting of a wax having an amide group and a wax having a carboxy group, and
the composition has a dielectric loss tangent of 0.01 or less.

### (Supplementary Note 5)

The composition according to any one of Supplementary Notes 1 to 4, wherein the thermoplastic resin is at least one thermoplastic resin selected from the group consisting of polyolefin resin, polystyrene resin, polyphenylene ether resin, and thermoplastic fluororesin.

### (Supplementary Note 6)

The composition according to any one of Supplementary Notes 1 to 5, wherein the wax is a wax having an amide group.

### (Supplementary Note 7)

The composition according to any one of Supplementary Notes 1 to 6, wherein the inorganic dielectric filler is titanium oxide particles.

### (Supplementary Note 8)

An electromagnetic flux control member, including:
the composition according to any one of Supplementary Notes 1 to 7.

### (Supplementary Note 9)

The electromagnetic flux control member according to Supplementary Note 8, wherein the electromagnetic flux control member is usable for communication using electromagnetic waves having a frequency of 300 GHz or more.

### (Supplementary Note 10)

A lens antenna, including:
the composition according to any one of Supplementary Notes 1 to 7, or the electromagnetic flux control member according to Supplementary Note 8 or 9.

### (Supplementary Note 11)

The lens antenna according to Supplementary Note 10, wherein
the lens antenna is usable for communication using electromagnetic waves having a frequency of 300 GHz or more.

### (Supplementary Note 12)

A communication device, including:
the electromagnetic flux control member according to Supplementary Note 8 or 9, or the lens antenna according to Supplementary Note 10 or 11.

### (Supplementary Note 13)

A communication method, including:
controlling a propagation direction of electromagnetic waves using the electromagnetic flux control member according to Supplementary Note 8 or 9, or the lens antenna according to Supplementary Note 10 or 11; and
performing communication using the electromagnetic waves.

### (Supplementary Note 14)

The communication method according to Supplementary Note 13, wherein the electromagnetic waves are electromagnetic waves having a frequency of 300 GHz or more.

### Industrial Applicability

As described above, according to the present disclosure, it is possible to provide a composition having a high dielectric constant and a low dielectric loss tangent and having excellent moldability even when the content of the inorganic dielectric filler is high, an electromagnetic flux control member using the composition, and a communication method. The composition and the electromagnetic flux control member of the present disclosure are useful, for example, for communication using electromagnetic waves. For example, since the composition and the electromagnetic flux control member of the present disclosure have a high dielectric constant (i.e., a high refractive index), communication using high-frequency electromagnetic waves becomes possible, and miniaturization of the electromagnetic flux control member becomes possible. However, the applications of the composition and the electromagnetic flux control member of the present disclosure are not limited to those described above and can be utilized in a wide range of applications.

This application claims priority from Japanese Patent Application No. 2024-00063 filed on January 5, 2024. The entire subject matter of the Japanese Patent Application is incorporated herein by reference.

### Reference Signs List

- 100: Electromagnetic flux control member
- 110: First region
- 120: Second region
- 130: Flange

## Claims

1. A composition, comprising:
a thermoplastic resin;
an inorganic dielectric filler; and
a wax, wherein
the inorganic dielectric filler comprises at least one compound selected from the group consisting of titanium oxide, zirconium oxide, hafnium oxide, rutherfordium oxide, and salts thereof,
the wax includes a wax having an SP value of 8.5 (cal/cm³)^{1/2} or more, and
the composition has a dielectric loss tangent of 0.01 or less.

2. The composition according to claim 1, wherein
the wax includes a wax having an SP value of 9.0 (cal/cm³)^{1/2} or more.

3. The composition according to claim 1 or 2, wherein
the thermoplastic resin includes a thermoplastic resin having an SP value of 7.5 (cal/cm³)^{1/2} or more.

4. A composition, comprising:
a thermoplastic resin;
an inorganic dielectric filler; and
a wax, wherein
the inorganic dielectric filler comprises at least one compound selected from the group consisting of titanium oxide, zirconium oxide, hafnium oxide, rutherfordium oxide, and salts thereof,
the wax includes at least one wax selected from the group consisting of a wax having an amide group and a wax having a carboxy group, and
the composition has a dielectric loss tangent of 0.01 or less.

5. The composition according to any one of claims 1 to 4, wherein
the wax is a wax having an amide group.

6. The composition according to any one of claims 1 to 5, wherein
the inorganic dielectric filler is titanium oxide particles.

7. An electromagnetic flux control member, comprising:
the composition according to any one of claims 1 to 6.

8. The electromagnetic flux control member according to claim 7, wherein the electromagnetic flux control member is usable for communication using electromagnetic waves having a frequency of 300 GHz or more.

9. A communication method, comprising:
controlling a propagation direction of electromagnetic waves using the electromagnetic flux control member according to claim 7 or 8; and
performing communication using the electromagnetic waves.

10. The communication method according to claim 9, wherein
the electromagnetic waves are electromagnetic waves having a frequency of 300 GHz or more.
